# EUROPÄISCHE PATENTSCHRIFT

(11) **EP 2 371 594 B1**
(45) Veröffentlichungstag und Bekanntmachung des Hinweises auf die Patenterteilung: **06.11.2013**
(21) Anmeldenummer: 11000512.1
(22) Anmeldetag: 22.01.2011
(51) Int. Cl.: B60J 5/06, B60J 7/06, B60J 7/10

(54) **Fahrzeugaufbau mit Seitenplane inbesondere für Nutzfahrzeuge**
Vehicle superstructure with side curtain particularly for lorries
Structure de véhicule avec une bâche latérale en partculier pour véhicules utilitaires

(30) Priorität: 24.03.2010 DE 102010012685
(43) Veröffentlichungstag der Anmeldung: 05.10.2011
(73) Patentinhaber: Fahrzeugwerk Bernard Krone GmbH, 48480 Spelle (DE)
(72) Erfinder: Perk, Thorsten, 26901 Lorup (DE); Singer, Mario, 49832 Freren (DE)
(74) Vertreter: Pott, Ulrich

(56) Entgegenhaltungen:
- EP-A2- 1 375 313
- EP-A2- 1 867 509
- DE-A1- 19 756 617

## Beschreibung

Die Erfindung bezieht sich auf einen Fahrzeugaufbau für insbesondere Nutzfahrzeuge mit zumindest einer sich von einem Aufbauboden zu einem oberen Dachlängsträger erstreckenden, zwischen einer Vorderwand und einer Rückwand des Fahrzeugaufbaus angeordneten Vertikalrunge wobei zumindest ein seitlicher Fahrzeugaufbau eine vorzugsweise als Schiebeplane ausgebildete Seitenplane aufweist, die über Befestigungsmittel an dem Fahrzeugaufbau lösbar zu sichern ist.

Ein solcher Fahrzeugaufbau ist aus der EP 186 7509 bekannt.

Fahrzeugaufbauten der vorgenannten Art für Nutzfahrzeuge oder Wechseleinrichtungen haben in herkömmlicher Ausbildung eine Schiebeplane, die in Dachlängsträgern geführt ist und durch vertikale Planenspanner gespannt oder an Bordwänden des Fahrzeugaufbaus über Planenkrampen zu befestigen ist. Unter einem Fahrzeugaufbau wird im Rahmen der vorliegenden Patentanmeldung verstanden, ein fest mit einem Fahrzeugchassis verbundener Aufbau, aber auch ein austauschbarer Ladungsträger wie Container, Wechselaufbau wie ein Wechselbehälter und dgl.. Zusätzlich wird diese Schiebeplane vielfach an einer Stirnwand oder einer Rückwand des Fahrzeugaufbaus mit Spannratschen, Spannhebeln und oder Getrieben horizontal gespannt (z.B. EP 1375313 A2). Ist eine Plane für Sattelauflieger oder für Anhänger als Vollplane bzw. als Überwurfplane ausgebildet, wird diese an seitlichen Bordwänden, an der Stirnwand und an der Rückwand mit Bügelkrampen und einem Zollseil gesichert (z.B. DE 197 56 617 A1).

Bei Fahrzeugaufbauten der vorgenannten Art ist es erforderlich, an Vertikalrungen Einstecklatten aus Holz oder Aluminium vorzusehen, umdie seitliche Ladungs sicherung zu übernehmen. Dazu sind an den Vertikalrungen und an der Stirnwand und der Rückwand Einstecktaschen vorzusehen, in die die Einstecklatten aus Holz oder Aluminium einzulegen sind.

Solche Einstecklatten mit dem Erfordernis, an den Vertikalrungen und an der Stirnwand und der Rückwand entsprechende Einstecktaschen auszubilden erhöhen die Gesamtkosten des Fahrzeugaufbaus in nicht unerheblicher Weise, verursachen ein höheres Gewicht, erhöhen den Zeitaufwand beim Beladen und Entladen des Fahrzeuges, was wiederum zu erhöhten Betriebskosten des Fahrzeugs durch das Erfordernis der mitzuführenden und auch im Verschleißfall zu ersetzenden bzw. zu wartenden Bauteile zur Ladungssicherung führt und verursachen zudem ein erhöhtes Unfallrisiko aufgrund herausfallender Einstecklatten.

Es ist Aufgabe der vorliegenden Erfindung, einen hinsichtlich der Ladungssicherung verbesserten Fahrzeugaufbau zu schaffen.

Zur Lösung dieser Aufgabe zeichnet sich der Fahrzeugaufbau der eingangs genannten Art dadurch aus, dass an der Seitenplane ein Befestigungselement als Befestigungsmittel der Seitenplane an dem Fahrzeugaufbau vorgesehen ist, das lösbar in eine an der Vertikalrunge vorgesehene Befestigungsaufnahme eingreift.

Damit ist ein Fahrzeugaufbau mit einer Seitenplane zur Verfügung gestellt, die direkt über das Befestigungselement an der Vertikalrunge so festzulegen ist, so dass sie sicher direkt an der Vertikalrunge festgelegt werden kann. Damit kann die Seitenplane direkt an der Vertikalrunge stabilisiert und damit auch ausgesteift werden. Dabei können auch mehrere Befestigungselemente der Seitenplane mit einem Höhenabstand zueinander in den entsprechend vorgesehenen Befestigungsaufnahmen der Vertikalrunge eingreifen. Da über die Länge eines Fahrzeuges mehrere Vertikalrungen an jeder Fahrzeugseite vorgesehen sind, können an jeder Vertikalrunge die entsprechenden Befestigungsaufnahmen vorgesehen sein, in die Befestigungselemente der Seitenplane eingreifen. Damit ist über die gesamte Länge eines Fahrzeugaufbaus durch direkte Kopplung von Vertikalrunge und Seitenplane eine deutlich verbesserte Ladungssicherung durch die Seitenplane selbst und die Vertikalrunge sicherzustellen. Ist noch an einzelnen gefährdeten Stellen eine zusätzliche Ladungssicherung vorzusehen, kann diese durch zusätzliche Ladungssicherungselemente wie beispielsweise auch herkömmliche Latten aus Holz oder Aluminium vorgesehen werden, die wiederum in althergebrachter Weise in vorgesehene Einstecktaschen anzuordnen sind.

Insgesamt ist jedoch durch den verbesserten Fahrzeugaufbau eine Verringerung des Gewichtes eines solchen Fahrzeugaufbaus mit üblichen Abmessungen von bis zu 150 kg zu erreichen, was nicht nur zu wesentlich geringeren Herstellungskosten führt, sondern auch zu wesentlich geringeren Betriebskosten allein schon aufgrund des reduzierten Fahrzeugaufbaugewichtes, aber auch durch ein zeitoptimiertes Handling beim Entladen und Beladen des Fahrzeugaufbaus, durch Verringerung von Verschleißteilen und dgl.

Die Befestigungselemente können direkt in die Seitenplane eingelassen sein, wobei die Seitenplane an diesen Stellen auch eine Planenverstärkung als Verschleißschutz aufweisen kann. Besonders bevorzugt ist, wenn das Befestigungselement bzw. die mit Höhenabstand zueinander vorgesehenen Befestigungselemente an einer Verstärkungsplatte, z.B. in Gestalt eines Verstärkungsbleches, vorgesehen sind, an der die Befestigungselemente z.B. durch eine Schweißverbindung angebracht sind. Eine derartige Verstärkungsplatte kann mit der Plane verklebt, verschweißt, vernietet und/oder verschraubt sein. Die Befestigungselemente sind derart ausgebildet, dass sie z.B. in als fensterartige Ausnehmungen ausgebildete Befestigungsaufnahmen in der Vertikalrunge eingreifen können und durch eine entsprechende Abwärtsbewegung dort zu sichern sind und für einen Entriegelungsvorgang nach oben zu bewegen sind mitsamt der Plane, und soweit vorgesehen, mit der Verstärkungsplatte. Dies ist von dem Benutzer mit wenigen Handgriffen zu vollziehen. Ein den Luftwiderstand erhöhendes Aufblähen mit den damit einhergehenden negativen Konsequenzen ist durch die direkte Kopplung der Seitenplane mit der Vertikalrunge vermieden.

Alternativ kann auch vorgesehen sein, dass an der Plane zum Laderaum hin ausgerichtete Planentaschen vorgesehen sind, in die die Verstärkungsplatte mit den daran befestigten Befestigungselementen einzulegen ist. Diese können dann in die entsprechenden Befestigungsaufnahmen in der vorbeschriebenen Art und Weise wiederum eingreifen, wonach mit verschiedenen Spannelementen oder auch mit seitlich vorgesehenen Befestigungsmitteln die Befestigungselemente in den Befestigungsaufnahmen zu sichern sind.

Zur weiteren Erläuterung der Erfindung wird auf weitere Unteransprüche, die nachfolgende Beschreibung und die Zeichnung verwiesen. In der Zeichnung zeigen:
- Fig. 1: schematisch eine perspektivische Darstellung auf ein Ausführungsbeispiel eines Fahrzeugaufbaus nach der Erfindung mit Blick auf eine Innenseitenwand des Fahrzeugaufbaus;
- Fig. 2: vergrößert die Einzelheit A in Fig. 1 und
- Fig. 3: vergrößert das Befestigungselement der Ansicht nach Fig. 2;
- Fig. 4: in einer Draufsicht ein Verstärkungsblech mit einem Befestigungs-element;
- Fig. 5: eine Seitenansicht des Ausführungsbeispiels nach Fig. 4
- Fig. 6: die Einzelheit A in Fig. 4;
- Fig. 7: die Einzelheit B in Fig. 5 und
- Fig. 8: das Befestigungselement in einer Querschnittsdarstellung.

In der Zeichnung sind gleichwirkende Teile mit übereinstimmenden Bezugsziffern versehen.

Allgemein mit 1 ist der Fahrzeugaufbau für Nutzfahrzeuge beziffert, der ein Chassis 2 aufweist, einen Aufbauboden 3, eine Vorderwand 4 und eine Rückwand 5 sowie einen Dachlängsträger 6 und Vertikalrungen 7. Zudem ist eine allgemein mit 8 bezifferte Seitenplane vorgesehen, die vertikale Planenverstärkungen 9 und horizontale Planenverstärker 10 aufweist, die jeweils als Verstärkungsgurte ausgebildet sind. Zudem sind in die Plane 8 noch Diagonalverstärkungen 11 eingebracht. In dem dargestellten Ausführungsbeispiel soll die Seitenplane 8 als Schiebeplane ausgebildet sein und in den oberen Dachlängsträgern 6 verschieblich geführt sein.

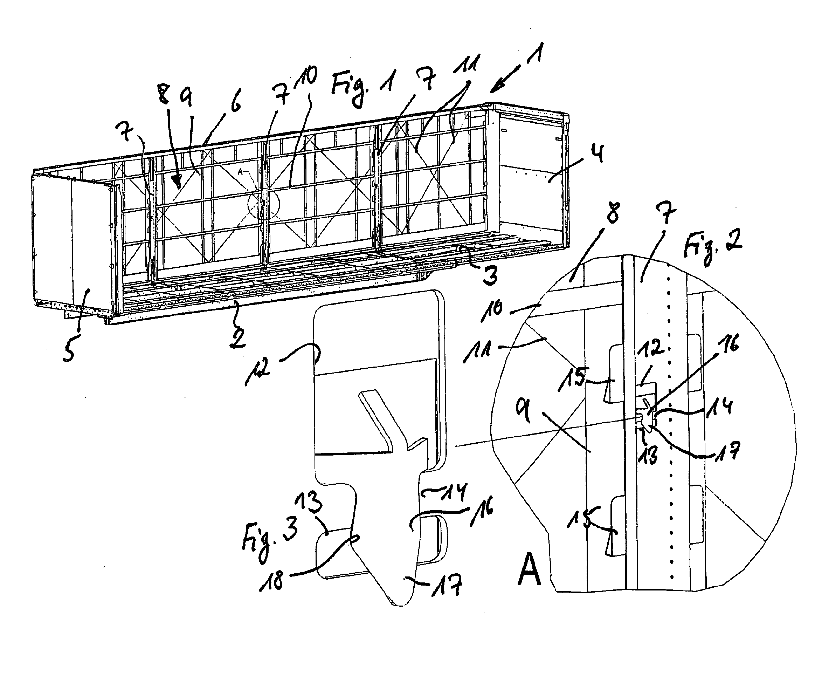

Wie im einzelnen näher aus Fig. 2 hervorgeht, die die Einzelheit A an der Vertikalrunge 7 in Fig. 1 vergrößert zeigt, hat die Vertikalrunge 7 zwei fensterartige Ausnehmungen. Die obere fensterartige Ausnehmung ist mit 12 beziffert und die untere mit Abstand zu dieser angeordnete kleinere fensterartige Ausnehmungen mit 13. Zwischen beiden fensterartigen Ausnehmungen 12 und 13 ist ein Rungenabschnitt 14 vorgesehen. Der Vollständigkeit halber ist noch angedeutet, dass noch Befestigungstaschen 15 vorgesehen sein können, um im Bedarfsfall zusätzliche Einstecklatten als Ladungssicherung vorsehen zu können.

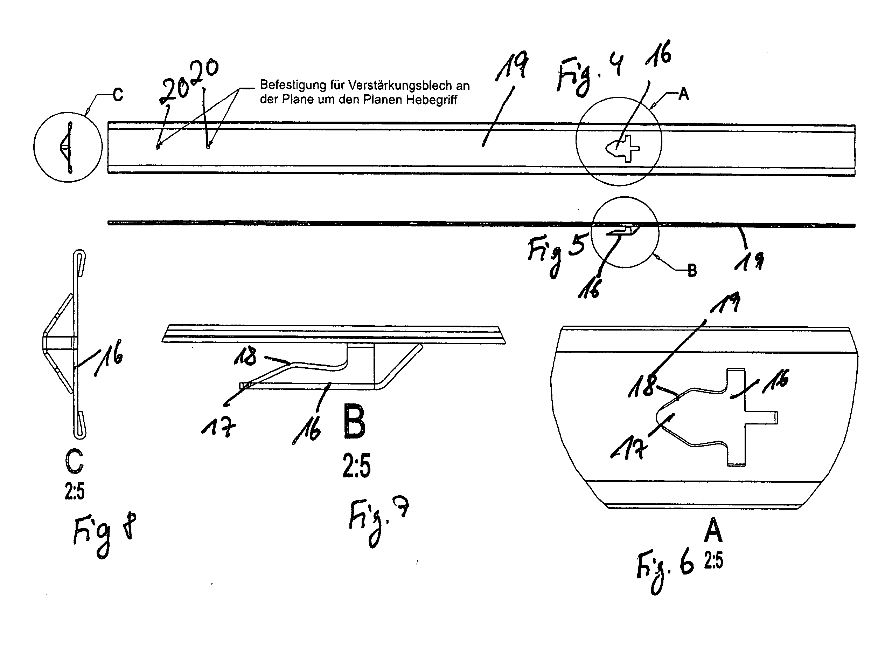

Die Seitenplane 8 ist mit einem Befestigungselement 16 versehen, das ein hakenförmiges Ende 17 aufweist, das nach Art einer Schaufel mit abgerundeten Spitzenendbereich gestaltet ist und am anderen Ende nach Art eines Ankers (siehe Fig. 3) gestaltet ist. Dieses greift in die Ausnehmung 12, im montierten Zustand ein, übergreift den Rungenabschnitt 14, greift dann mit dem wiederum leicht nach innen zulaufenden Bereich (Siehe auch Fig. 5 und Fig. 7) derart in die untere kleinere fensterartige Öffnung 13 als Befestigungsaufnahme der Vertikalrunge 7 ein, dass die Plane im montierten Zustand gegen eine Bewegung nach oben hin gesichert ist, indem der Bereich 18 in die Befestigungsnahme 13 nach innen hin eingreift.

Die Fig. 4 bis 8 verdeutlichen das Befestigungselement 16 von der Gestaltung her, dem spitzen Ende 17 und dem Schrägverlauf 18. Wie daraus ersichtlich ist, ist das Befestigungselement 16 an einem Verstärkungsblech 19 angeordnet, das direkt mit der Plane 8 verbunden ist.

Zusätzlich sind an den Verstärkungsblechen 19 noch Befestigungslöcher 20 vorgesehen, um daran Schlaufen zu befestigen, die an der Außenseite der Plane 8 angeordnet sind, um die Plane 8 im Bereich der Verstärkungsplatte 19 anzuheben bzw. herunterzuziehen.

## Patentansprüche

1. Fahrzeugaufbau (1) für insbesondere Nutzfahrzeuge, mit zumindest einer sich von einem Aufbauboden (3) zu einem oberen Dachlängsträger (6) erstreckenden, zwischen einer Vorderwand (4) und einer Rückwand (5) des Fahrzeugaufbaus (1) angeordneten Vertikalrunge (7), wobei zumindest ein seitlicher Bereich des Fahrzeugaufbaus eine vorzugsweise als Schiebeplane ausgebildete Seitenplane (8) aufweist, die über Befestigungsmittel an dem Fahrzeugaufbau (1) lösbar zu sichern ist, **dadurch gekennzeichnet, dass** an der Seitenplane (8) ein Befestigungselement (16) als Befestigungsmittel der Seitenplane (8) an dem Fahrzeugaufbau (1) vorgesehen ist, das lösbar in eine an der Vertikalrunge (7) vorgesehene Befestigungsaufnahme (12, 13) eingreift.

2. Fahrzeugaufbau nach Anspruch 1, **dadurch gekennzeichnet, dass** als Befestigungsaufnahme (12, 13) in der Vertikalrunge (7) zumindest ein Ausschnitt vorgesehen ist, in den ein Befestigungsbereich (17) des Befestigungselementes (16) der Seitenplane (8) eingreift.

3. Fahrzeugaufbau nach Anspruch 2, **dadurch gekennzeichnet, dass** in der Vertikalrunge (7), mit Abstand zueinander angeordnete, jedoch einander zugeordnete fensterartige Ausschnitte als Befestigungsaufnahmen (12, 13) vorgesehen sind, in die ein hakenförmiges Ende (17) des Befestigungselementes (16) der Seitenplane (8) eingreift.

4. Fahrzeugaufbau nach einem der Ansprüche 1 bis 3, **dadurch gekennzeichnet, dass** das Befestigungselement (16) der Seitenplane (8) an einem Verstärkungselement (19) der Seitenplane (8) angreift.

5. Fahrzeugaufbau nach Anspruch 4, **dadurch gekennzeichnet, dass** das Verstärkungselement (19) als Verstärkungsplatte ausgebildet ist.

6. Fahrzeugaufbau nach Anspruch 4, **dadurch gekennzeichnet, dass** die Verstärkungsplatte (19) mit der Seitenplane (8) vernietet, verklebt oder verschraubt ist.

7. Fahrzeugaufbau nach Anspruch 5, **dadurch gekennzeichnet, dass** die Seitenplane eine Planentasche aufweist, in die die Verstärkungsplatte (19) mit dem Befestigungselement (16) lose eingelegt ist.

8. Fahrzeugaufbau nach einem der Ansprüche 5 bis 7, **dadurch gekennzeichnet, dass** die Verstärkungsplatte (19) als Verstärkungsblech ausgebildet ist.

9. Fahrzeugaufbau nach einem der Ansprüche 1 bis 8, **dadurch gekennzeichnet, dass** die Seitenplane (8) im Bereich des Befestigungselementes (16) mit einer Planenverstärkung als Verschleißschutz ausgebildet ist.

10. Fahrzeugaufbau nach einem der Ansprüche 1 bis 9. **dadurch gekennzeichnet, dass** horizontal ausgerichtete Planenverstärkungsgurte (10) an der Seitenplane (8) vorgesehen sind.

11. Fahrzeugaufbau nach Anspruch 10 sowie einem der Ansprüche 5 bis 7, **dadurch gekennzeichnet, dass** die horizontalen Planenverstärkungsgurte (10) die Verstärkungsplatte (19) übergreifen.

12. Fahrzeugaufbau nach Anspruch 3, **dadurch gekennzeichnet, dass** das Befestigungselement (16) derart mit zwei einander zugeordneten fensterartigen Ausnehmungen (12, 13) in den Vertikalrungen (7) zusammenwirkt, dass das Befestigungselement (16) zunächst in die obere fensterartige Ausnehmung (13) einsetzbar ist und den Rungenabschnitt (14) zwischen der ersten und zweiten fensterartigen Öffnung übergreift und in die untere fensterartige Ausnehmung (13) der Vertikalrunge derart eingreift, so dass das Befestigungselement (16) die Plane (8) gegen eine Bewegung nach oben sichert.

13. Fahrzeugaufbau nach einem der Ansprüche 1 bis 12, **dadurch gekennzeichnet, dass** zusätzliche Spannelemente vorgesehen sind, um die Seitenplane (8) in vertikaler Richtung und/oder in horizontaler Richtung zu sichern und/oder zu verspannen.

## Claims

1. Vehicle superstructure (1) for commercial vehicles, in particular, having at least one vertical rung (7) that extends from a superstructure floor (3) to an upper longitudinal roof beam (6), disposed between a front wall (4) and a rear wall (5) of the vehicle superstructure (1), wherein at least one lateral region of the vehicle superstructure has a side curtain (8) preferably configured as a sliding curtain, which can be releasably secured on the vehicle superstructure (1) by way of fastening means, **characterized in that** a fastening element (16) is provided on the side curtain (8) as a fastening means for fastening the side curtain (8) on the vehicle superstructure (1), which element releasably engages into a fastening accommodation (12, 13) provided on the vertical rung (7).

2. Vehicle superstructure according to claim 1, **characterized in that** at least one cut-out is provided in the vertical rung (7) as a fastening accommodation (12, 13) into which a fastening region (17) of the fastening element (16) of the side curtain (8) engages.

3. Vehicle superstructure according to claim 2, **characterized in that** window-like cutouts disposed in the vertical rung (7) at a distance from one another, but assigned to one another, are provided as fastening accommodations (12, 13) into which a hook-shaped end (17) of the fastening element (16) of the side curtain (8) engages.

4. Vehicle superstructure according to one of claims 1 to 3, **characterized in that** the fastening element (16) of the side curtain (8) engages on a reinforcement element (19) of the side curtain (8).

5. Vehicle superstructure according to claim 4, **characterized in that** the reinforcement element (19) is configured as a reinforcement plate.

6. Vehicle superstructure according to claim 4, **characterized in that** the reinforcement plate (19) is riveted, glued, or screwed onto the side curtain (8).

7. Vehicle superstructure according to claim 5, **characterized in that** the side curtain has a curtain pocket into which the reinforcement plate (19) with the fastening element (16) is loosely laid.

8. Vehicle superstructure according to one of claims 5 to 7, **characterized in that** the reinforcement plate (19) is configured as a metal reinforcement sheet.

9. Vehicle superstructure according to one of claims 1 to 8, **characterized in that** the side curtain (8) is configured with a curtain reinforcement, as anti-wear protection, in the region of the fastening element (16).

10. Vehicle superstructure according to one of claims 1 to 9, **characterized in that** horizontally oriented curtain reinforcement belts (10) are provided on the side curtain (8).

11. Vehicle superstructure according to claim 10 as well as one of claims 5 to 7, **characterized in that** the horizontal curtain reinforcement belts (10) engage over the reinforcement plate (19).

12. Vehicle superstructure according to claim 3, **characterized in that** the fastening element (16) interacts with two window-like recesses (12, 13) in the vertical rungs, which are assigned to one another, in such a manner that the fastening element (16) can first be inserted into the upper window-like recess (13) and engages over the rung section (14) between the first and second window-like opening, and engages into the lower window-like recess (13) of the vertical rung in such manner that the fastening element (16) secures the curtain (8) to prevent movement toward the top.

13. Vehicle superstructure according to one of claims 1 to 12, **characterized in that** additional tensioning elements are provided to secure and/or to tension the side curtain (8) in the vertical direction and/or in the horizontal direction.

## Revendications

1. Carrosserie automobile (1), en particulier pour véhicules utilitaires, comportant au moins un rancher vertical (7) s'étendant depuis un plancher de carrosserie (3) à un longeron de toit (6) supérieur, disposé entre une paroi avant (4) et une paroi arrière (5) de la carrosserie automobile (1), au moins une zone latérale de la carrosserie automobile présentant une bâche latérale (8) réalisée de préférence comme une bâche coulissante, qui est à bloquer de manière détachable par le biais de moyens de fixation sur la carrosserie automobile (1), **caractérisée en ce qu'**un élément de fixation (16) est prévu sur la bâche latérale (8) pour servir de moyen de fixation de la bâche latérale (8) sur la carrosserie automobile (1), lequel s'engage de manière amovible dans un logement de fixation (12, 13) prévu sur le rancher vertical (7).

2. Carrosserie automobile selon la revendication 1, **caractérisée en ce qu'**au moins une rainure est prévue comme logement de fixation (12, 13) dans le rancher vertical (7), dans laquelle une zone de fixation (17) de l'élément de fixation (16) de la bâche latérale (8) s'engage.

3. Carrosserie automobile selon la revendication 2, **caractérisée en ce que** des rainures de type fenêtre comme logement de fixation (12, 13) associées toutefois les unes aux autres, disposées à distance les unes des autres sont prévues dans le rancher vertical (7), dans lesquelles une extrémité en forme de crochet (17) de l'élément de fixation (16) de la bâche latérale (8) s'engage.

4. Carrosserie automobile selon l'une quelconque des revendications 1 à 3, **caractérisée en ce que** l'élément de fixation (16) de la bâche latérale (8) agit sur un élément de renforcement (19) de la bâche latérale (8).

5. Carrosserie automobile selon la revendication 4, **caractérisée en ce que** l'élément de renforcement (19) est réalisé comme une plaque de renforcement.

6. Carrosserie automobile selon la revendication 4, **caractérisée en ce que** la plaque de renforcement (19) est rivetée, collée ou vissée à la bâche latérale (8).

7. Carrosserie automobile selon la revendication 5, **caractérisée en ce que** la bâche latérale présente une poche de bâche, dans laquelle la plaque de renforcement (19) est insérée de manière lâche avec l'élément de fixation (16).

8. Carrosserie automobile selon l'une quelconque des revendications 5 à 7, **caractérisée en ce que** la plaque de renforcement (19) est réalisée comme une tôle de renforcement.

9. Carrosserie automobile selon l'une quelconque des revendications 1 à 8, **caractérisée en ce que** la bâche latérale (8) est réalisée dans la zone de l'élément de fixation (16) avec un renforcement de bâche comme protection contre l'usure.

10. Carrosserie automobile selon l'une quelconque des revendications 1 à 9, **caractérisée en ce que** des sangles de renforcement de bâche (10) orientées horizontalement sont prévues sur la bâche latérale (8).

11. Carrosserie automobile selon la revendication 10 ainsi que l'une quelconque des revendications 5 à 7, **caractérisée en ce que** les sangles de renforcement de bâche horizontales (10) recouvrent la plaque de renforcement (19).

12. Carrosserie automobile selon la revendication 3, **caractérisée en ce que** l'élément de fixation (16) coagit avec deux évidements (12, 13) de type fenêtre associées l'un à l'autre dans les ranchers verticaux (7) de telle manière que l'élément de fixation (16) puisse être inséré tout d'abord dans l'évidement (13) supérieur de type fenêtre et recouvre la section de rancher (14) entre la première et seconde ouverture de type fenêtre et s'engage dans l'évidement (13) inférieur de type fenêtre du rancher vertical de sorte que l'élément de fixation (16) bloque vers le haut la bâche (8) contre tout mouvement.

13. Carrosserie automobile selon l'une quelconque des revendications 1 à 12, **caractérisée en ce que** des éléments tendeurs supplémentaires sont prévus afin de bloquer et/ou tendre la bâche latérale (8) dans le sens vertical et/ou horizontal.
